(19) Europäisches Patentamt / European Patent Office / Office européen des brevets

(11) **EP 4 707 477 A1**

(12) **EUROPEAN PATENT APPLICATION**

(43) Date of publication:
**11.03.2026 Bulletin 2026/11**

(21) Application number: **25200679.6**

(22) Date of filing: **05.09.2025**

(51) International Patent Classification (IPC):
***E02F 9/26*** *(2006.01)*

(52) Cooperative Patent Classification (CPC):
**E02F 9/264**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.09.2024 JP 2024153943**

(71) Applicant: **TOPCON CORPORATION**
**Tokyo 174-8580 (JP)**

(72) Inventors:
• **SHIGETA, Masahiro**
  **Tokyo 174-8580 (JP)**
• **FUKAYA, Nobuyuki**
  **Tokyo 174-8580 (JP)**
• **MOMIYAMA, Homare**
  **Tokyo 174-8580 (JP)**

(74) Representative: **Schmitt-Nilson Schraud Waibel Wohlfrom**
**Patentanwälte Partnerschaft mbB**
**Pelkovenstraße 143**
**80992 München (DE)**

(54) **METHOD FOR OBTAINING HEAVY EQUIPMENT INFORMATION, APPARATUS FOR HANDLING HEAVY EQUIPMENT INFORMATION, AND PROGRAM**

(57) Information on location relationship between a camera and an optical target arranged on a rotating body of a heavy equipment is obtained easily. A method for obtaining information of heavy equipment (100) including a running body (101) having moving means and a rotating body (103) which is rotatable on the running body (101) and which has reflection prism (107) and a camera (108), the method includes: a first step in which location of the reflection prism (107) is measured by a total station (300) and SfM is performed using photographed images by the camera (108) during a process of rotating action of the rotating body (103); and a second step in which the location of the reflection prism (107) is measured by the total station (300) and SfM is performed using the photographed images by the camera (108) during a process of straight-moving action of the running body (101) without rotating the rotating body (103); wherein relationship of the location of the reflection prism (107) and the location of the camera (108) on the rotating body (103) is calculated based on the location of the reflection prism (107) and the location and the orientation of the camera (108) obtained by SfM in the first step and the second step.

Fig. 1

EP 4 707 477 A1

## Description

Technical Field

The present invention relates to a technique for handling information of heavy equipment.

Background Art

A technique is known in which location of movable portion of a heavy equipment is measured (for example, see Patent documents 1 to 4.).

The Patent documents are as follows.

Patent document 1: Japanese Unexamined Patent Application Publication No. 2017-181340
Patent document 2: U.S. Patent No. 6711838
Patent document 3: Japanese Patent No. 7514459
Patent document 4: Japanese Unexamined Patent Application Publication No. 2008-2842

Summary of Invention

As a technique for detecting location of blade tip (for example, portion of a bucket of hydraulic shovel) of a heavy equipment (construction operation machine) using a surveying device, there is a method known in which a reflection prism and a camera are arranged on a rotating body of a hydraulic shovel, location of the reflection prism is measured by a total station, on the other hand, location and orientation of the camera are calculated by SfM using images photographed by the camera, adjustment calculations are performed and absolute location of rotation center and orientation of the rotating body are calculated, thereby calculate location of the blade tip.

In this technique, a preparation operation is necessary in which relationship of location of the camera and location of the reflection prism on the rotating body is preliminarily and strictly set. Since this operation is complicated, there is a need for a technique that can be easily implemented. In view of such circumstances, an object of the present invention is to provide a technique in which information of location relationship of a camera and an optical target arranged on a rotating body of a heavy equipment can be obtained easily.

One aspect of the present invention is a method for obtaining information of heavy equipment including a running body having moving means and a rotating body which is rotatable on the running body and which has an optical target and a camera, the method includes: a first step in which location of the optical target is measured by a surveying device and SfM is performed using photographed images by the camera during a process of rotating action of the rotating body; and a second step in which the location of the optical target is measured by the surveying device and SfM is performed using the photographed images by the camera during a process of straight-moving action of the running body without rotating the rotating body; in which relationship of the location of the optical target and location of the camera on the rotating body is calculated based on the location of the optical target obtained by the surveying device and the location and orientation of the camera obtained by SfM in the first step and the second step.

Another aspect of the present invention is a method for obtaining information of heavy equipment including a running body having moving means and a rotating body which is rotatable on the running body and which has an optical target and a camera, the method includes: a first step in which location of the optical target is measured by a surveying device and SfM is performed using photographed images by the camera during a process of rotating action of the rotating body; a second step in which the location of the optical target is measured by the surveying device and SfM is performed using the photographed images by the camera during a process of straight-moving action of the running body without rotating the rotating body; and a third step in which the location of the optical target is measured by the surveying device and SfM is performed using the photographed images by the camera during a process of tilting action of the rotating body from horizontal; in which relationship of the location of the optical target and location of the camera on the rotating body is calculated based on the location of the optical target obtained by the surveying device and the location and orientation of the camera obtained by SfM in the first step to the third step.

In the present invention, an aspect can be mentioned in which bundle adjustment calculation is performed based on the images photographed by the camera in the first step and the second step, and the bundle adjustment calculation is performed under constraint condition in which difference between the location of the optical target obtained by the surveying device and the location of the optical target obtained by the SfM in the first step and the second step becomes minimal.

In the present invention, an aspect can be mentioned in which the heavy equipment is a hydraulic shovel, and in the third step, an action is performed in which a bucket of the hydraulic shovel presses the ground so that the rotating body is tilted from horizontal direction.

Another aspect of the present invention is an apparatus for handling information of heavy equipment including a running body having moving means and a rotating body which is rotatable on the running body and which has an optical target and a camera, the apparatus includes an operating unit executing following steps: a first step in which location of the optical target is measured by a surveying device and SfM is performed using photographed images by the camera during a process of rotating action of the rotating body; and a second step in which the location of the optical target is measured by the surveying device and SfM is performed using the photographed images by the camera during a process of straight-moving action of the running body without rotating the rotating body; in which relationship of the location of the optical target and location of the camera on the rotating body can be calculated based on the location of the optical target obtained by the surveying device and the location and orientation of the camera obtained by SfM in the first step and the second step.

Another aspect of the present invention is a program made to, when read and executed by a computer processor, cause the computer processor to execute processing of information of heavy equipment including a running body having moving means and a rotating body which is rotatable on the running body and which has an optical target and a camera, the processing includes following steps: a first step in which location of the optical target is measured by a surveying device and SfM is performed using photographed images by the camera during a process of rotating action of the rotating body; and a second step in which the location of the optical target is measured by the surveying device and SfM is performed using the photographed images by the camera during a process of straight-moving action of the running body without rotating the rotating body; in which relationship of the location of the optical target and location of the camera on the rotating body can be calculated based on the location of the optical target obtained by the surveying device and the location and orientation of the camera obtained by SfM in the first step and the second step.

Effect of Invention

According to the present invention, information of location relationship between a camera and an optical target arranged on a rotating body of a heavy equipment can be easily obtained.

Brief Description of Drawings

Fig. 1 is a conceptual diagram of Embodiment.
Fig. 2 is a block diagram of an operating device.
Fig. 3 is a flowchart diagram showing one example of steps of processing.
Fig. 4 is a flowchart diagram showing one example of steps of processing.
Fig. 5 is a conceptual diagram showing relationship of camera location and prism location.
Fig. 6 is a conceptual diagram of Embodiment.
Fig. 7 is a flowchart diagram showing one example of steps of processing.

Embodiments of Invention

1. First Embodiment

(Summary)

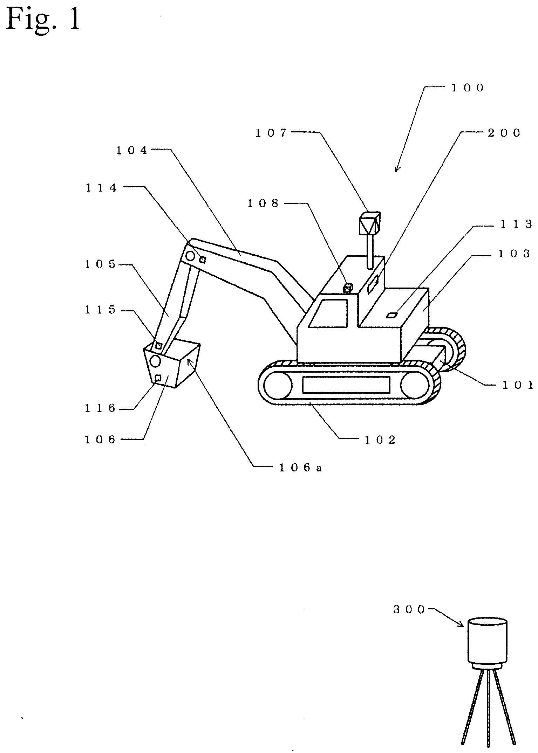

In an aspect shown in Fig. 1, location in the absolute coordinate system (also said as the global coordinate system) of a reflection prism 107 is continuously measured by a total station 300. The absolute coordinate system is a coordinate system which is used in GNSS or maps. For example, the location in the absolute coordinate system is described by longitude, latitude, and altitude.

A heavy equipment 100 performs on-site calibration at start of work. In this processing, a rotating body 103 is rotated in a condition in which a running body 101 is stopped, and location of rotation center of the rotating body 103 in the absolute coordinate system is calculated based on movement trajectory of the reflection prism 107.

Under a situation in which the running body 101 has not been moved since the time of the on-site calibration, the location of rotation center of the rotating body 103 has not moved, and the location of rotation center of the rotating body 103 can be calculated by measured location of the reflection prism 107 by the total station 300. Location and orientation of blade tip 106a of bucket 106 are calculated based on the location of the reflection prism 107, the location of the rotation center of the rotating body 103, and measured values of tilt sensors 113 to 116.

The location of the rotation center of the rotating body 103 and the camera 108 also move accompanied by moving of the running body 101. Move pathway of the camera 108 at this time is calculated by SfM (Structure from Motion) based on photographed images by the camera 108. In addition, the location of the reflection prism 107 is also tracked by the total station, and the location is continuously measured.

Here, location relationship among the reflection prism 107, the camera 108 and the rotation center of the rotating body 103 in the rotating body 103 is known by an initial calibration mentioned below. Therefore, move pathway of the location of the rotation center of the rotating body 103 in the absolute coordinate system during moving of the running body 101 can be calculated, based on move pathway of the reflection prism 107 during moving of the running body 101, the move pathway of the camera 108 calculated by SfM, and result of the initial calibration.

Accordingly, even if the running body 101 moves since the time of the on-site calibration, the location of the rotation center of the rotating body 103 in the absolute coordinate system is specified continuously. This is continued if the running body 101 repeats moving intermittently. Therefore, even if the running body 101 moves, calculation of the location and the orientation of the blade tip 106a based on measured location of the reflection prism 107 by the total station 300 is continuously possible.

(Heavy equipment)

Fig. 1 shows the heavy equipment 100 which is a hydraulic shovel. The heavy equipment 100 includes the running body 101. The running body 101 includes a caterpillar track 102 which is a moving means. The running body 101 includes the rotating body 103 which can rotate horizontally thereon.

The rotating body 103 includes a boom 104. Tip of the boom 104 moves on a circular orbit within a vertical plane, with connection part with the rotating body 103 as the center of rotation. This movement causes the tip of the boom 104 to move up and down.

An arm 105 is attached to the tip of the boom 104. Tip of the arm 105 moves on a circular orbit within a vertical plane, with connection part with the boom 104 as the center of rotation. This movement causes the tip of the arm 105 to move in a direction toward or away from the rotating body 103.

A bucket 106 is attached to the tip of the arm 105. Tip of the bucket 106 rotates within a vertical plane, with connection part with the arm 105 as the center of rotation. This movement causes the tip of the bucket 106 (the part of blade tip 106a) to move in a direction toward or away from the rotating body 103 on an arc centered on the center of rotation. The movement of each part is controlled by hydraulic pressure. The movement and driving method of each part is the same as that of a conventional hydraulic shovel.

The reflection prism 107 which is an optical target and the camera 108 which is a photographing means are attached to upper part of the rotating body 103. The reflection prism 107 is an all-circumferential reflection prism, and it reflects light incident from a range of 360° in the horizontal direction and a range of ±30° in the vertical direction by inverting the direction by 180°. The reflection prism 107 is attached at a location that is off the rotation center of the rotating body 103. In other words, the reflection prism 107 is disposed at a location that moves on a circular orbit when the rotating body 103 rotates while the running body 101 is stationary. Installation location of the reflection prism 107 on the rotating body 103 does not need to be determined precisely, but the location relationship with the rotation center of the rotating body 103 may be determined in advance, such as on the front side or rear side.

The camera 108 repeatedly performs continuous photographing at a specific frequency. The frequency of photographing repeatedly performed is set to be 0.5 to 30 Hz. It is also possible to record a video and use frame images. According to SfM (Structure from Motion) based on the photographed images of the camera 108, change in the location and the orientation of the camera 108 can be calculated. It is also possible to use two or more cameras.

The location and the orientation of the camera 108 are adjusted so that the ground is included in range of photographing. The camera 108 is used to calculate the location of the rotation center of the rotating body 103. The camera 108 may be oriented in any direction as long as it can photograph an image of the ground, and there are no restrictions on the installation location (although it is needed to be fixed to the rotating body 103). It should be noted that the camera 108 may be directed forward to photograph images of the work being performed. In this case, the camera 108 can obtain image information that records the work being performed.

The reflection prism 107 and the camera 108 do not need to be precisely positioned when they are attached to the rotating body 103. The precise location relationship between them is determined by adjustment calculations during the initial calibration. It should be noted that in this adjustment calculation, it is preferable to provide the approximate separation distance L between the two as a constraint condition, in order to reduce calculation load and improve accuracy. Therefore, the approximate value of L when the reflection prism 107 and the camera 108 are installed on the rotating body 103 may be known or may be determined in advance (for example, they are installed approximately 1 meter apart, and so on).

A tilt sensor 113 is attached to the rotating body 103. A tilt sensor 114 is attached to the boom 104, a tilt sensor 115 is attached to the arm 105 and a tilt sensor 116 is attached to the bucket 106.

The heavy equipment 100 includes an operating device 200. The operating device 200 is a computer and performs kinds of operations mentioned below.

(Total station)

The total station 300 is arranged in a condition in which location and orientation in the absolute coordinate system thereof are known. The total station 300 measures a distance to the reflection prism 107 by the principles of laser ranging. By measuring direction of optical axis of ranging laser light at this time, direction of the reflection prism 107 seen from the total station 300 can be obtained.

The location of the reflection prism 107 relative to the total station 300 can be determined by knowing the distance from the total station 300 to the reflection prism 107 and the direction of the reflection prism 107 as seen from the total station 300. On the other hand, the location and the orientation of the total station 300 in the absolute coordinate system are known. Therefore, the location of the reflection prism 107 in the absolute coordinate system can be obtained based on the measurement value of the location of the reflection prism 107 by the total station 300.

Measurement of the location of the reflection prism 107 by the total station 300 is repeatedly performed at an interval of 10 Hz to 20 Hz. The total station 300 can also be provided with a camera to photograph an object to be measured.

Total station 300 has a function in which the reflection prism 107 is searched, collimated reflection prism 107 is locked, and even if the reflection prism 107 is moved, the location of the reflection prism 107 is continuously measured while tracking the reflection prism 107.

(Block diagram of operating device)

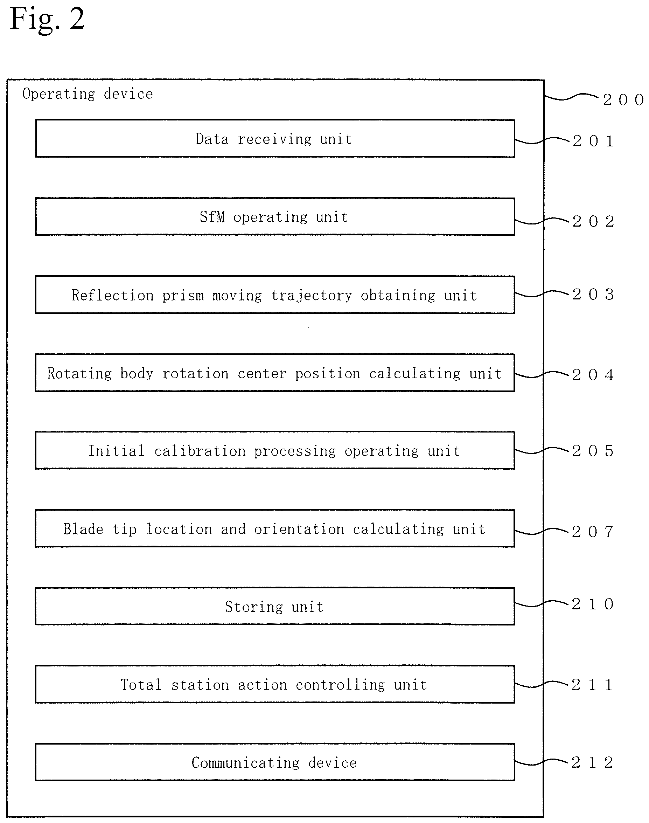

Fig. 2 is a block diagram of the operating device 200. The operating device 200 is a computer, and includes a data receiving unit 201, a SfM operating unit 202, a reflection prism movement trajectory obtaining unit 203, a rotating body rotation center position calculating unit 204, an initial calibration processing operating unit 205, a blade tip location and orientation calculating unit 207, a storing unit 210, a total station action controlling unit 211 and a communicating device 212.

The functional units other than the storing unit 210 and the communicating device 212 are constructed by software, and they are executed by executing action program for executing the functions by the CPU included in the operating device 200. A part or all of these functional units can be constructed by a special hardware (electronic circuit).

The data receiving unit 201 receives the measurement data of the location of the reflection prism 107 measured by the total station 300 and the image data photographed by the camera 108.

The SfM operating unit 202 performs mutual orientation and absolute orientation based on the images which are photographed by the camera 108, and calculates the location and the orientation of the camera 108 at a time of photographing of each of the photographed images and further location of feature points extracted from the photographed images.

The location relationship among the reflection prism 107, the location of the rotation center of the rotating body 103 and the camera 108 is obtained as a known information (initial calibration value) by the initial calibration mentioned below. Furthermore, information of scale which is necessary for the absolute orientation is also obtained during the initial calibration. Furthermore, the location (measured value) of the reflection prism 107 in the absolute coordinate system and the location (calculated value) of the rotation center of the rotating body 103 at the start of work are obtained by measurement of location of the reflection prism 107 using the total station 300 during the on-site calibration.

Therefore, the location and the orientation (initial values at the start of SfM) of the camera 108 in the absolute coordinate system at the start of work is given by using the location of the reflection prism 107, the location of the rotation center of the rotating body 103 and the initial calibration value. According to this, the location and the orientation of the camera 108 which are calculated by SfM are obtained as ones in the absolute coordinate system. Furthermore, locations of the feature points in the absolute coordinate system which are obtained from the photographed objects are also calculated.

The reflection prism movement trajectory obtaining unit 203 obtains trajectory along which the reflection prism 107 moved (change in the location in the absolute coordinate system), based on measurement data of the location of the reflection prism 107 by the total station 300.

The rotating body rotation center position calculating unit 204 calculates the location of the rotation center of the rotating body 103, based on the trajectory along which the reflection prism 107 moved. In a condition in which the running body 101 is not moved, the reflection prism 107 moves along circular orbit if the rotating body 103 rotates. Therefore, if the location of the reflection prism 107 is continuously measured by the total station 300, the measured movement trajectory of the reflection prism 107 may be an arc which is a part of circular orbit (it may be circular orbit if the rotating body 103 rotates once).

An axis that passes through center of curvature of this arc and is perpendicular to the rotating body 103 becomes the rotation axis of the rotating body 103. This rotation axis can be calculated from the arc. The rotation center of the rotating body 103 exists on this rotation axis. Although the location (location on Z axis) of the rotation center of the rotating body 103 on this rotation axis is not limited particularly as long as it is preliminarily determined location, for example, it may be set at a location of Z value (height position) at which the reflection prism 107 or the camera 108 are considered to exist, or inside of the rotating body 103.

When the rotating body 103 tilts, the rotation axis of the rotating body 103 also tilts. This tilt is measured by the tilt sensor 113. Therefore, in an actual processing, the tilt of the rotation axis of the rotating body 103 is obtained based on tilt information from the tilt sensor 113, and the location of the rotation center of the rotating body 103 on this rotation axis is calculated. The tilt of rotation axis of the rotating body 103 can be calculated from the tilt of the arc from horizontal plane.

The initial calibration processing operating unit 205 performs operating processing regarding the initial calibration which is performed after the reflection prism 107 and the camera 108 are attached to the rotating body 103. In this processing, relationship among the location of the reflection prism 107, the location of the rotation center of the rotating body 103, the location of the camera 108, and the orientation of the rotating body is obtained as the initial calibration value. The initial calibration will be explained later in detail.

The blade tip location and orientation calculating unit 207 calculates the location and the orientation of the blade tip 106a of the bucket 106 based on the measured location of the reflection prism 107 by the total station 300, the location of the rotation center of the rotating body 103, and the measured values of the tilt sensors 113, 114, 115 and 116.

Based on preliminary calibration processing and design data of the heavy equipment 100, relationship among the location and the orientation of the blade tip 106a, the location of the reflection prism 107, the location of the rotation center of the rotating body 103, and the measured values of the tilt sensors 113, 114, 115 and 116 is already obtained.

Here, under a condition in which the location of the rotation center of the rotating body 103 in the absolute coordinate system is obvious, if the location of the reflection prism 107 in the absolute coordinate system is measured by the total station 300, the location and the orientation of the blade tip 106a in the absolute coordinate system may be calculated based on the information and the measured values of the tilt sensors 113 to 116. This processing is performed in the blade tip location and orientation calculating unit 207.

The storing unit 210 stores data and action program which are necessary for action of the heavy equipment 100 therein. The total station action controlling unit 211 performs controlling on start and end of measurement of the reflection prism 107 by the total station 300. The communicating device 212 communicates with the total station 300 and other devices. The communication is performed by using conventionally known wireless communication standards such as wireless LAN.

(Initial calibration)

Hereinafter, detail of the initial calibration processing is explained. In the initial calibration, the heavy equipment 100 is caused to perform a specific action, and based on the measured values obtained therein, a specific operation is performed so as to obtain relationship among the location of the reflection prism 107, the location of the rotation center of the rotating body 103 and the location and the orientation of the camera 108. According to the initial calibration, initial value of SfM based on the photographed images of the camera 108 is obtained, and the location and the orientation of the camera 108 in the absolute coordinate system can be acquired by SfM, and three-dimensional location information of the subject to be photographed in the absolute coordinate system can be obtained.

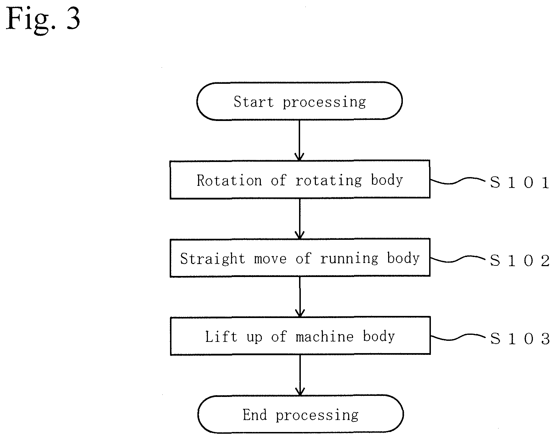

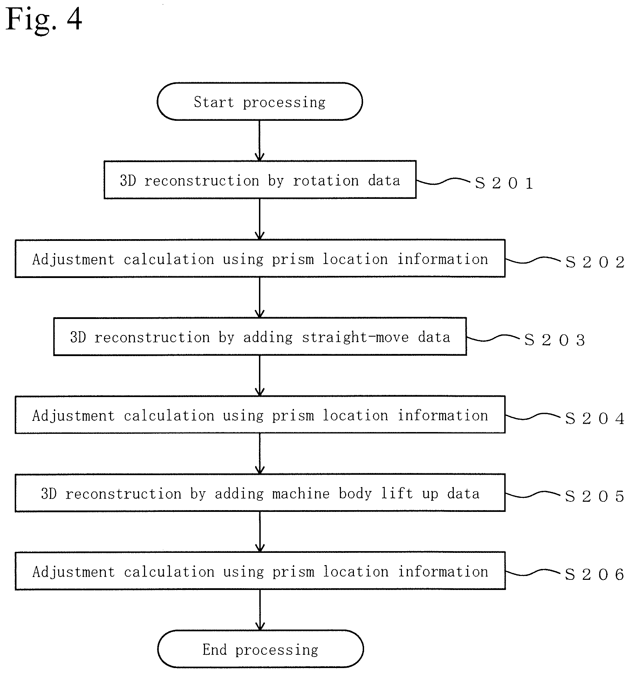

Fig. 3 is a flowchart diagram showing steps of action (steps of operation) of the heavy equipment 100 in the initial calibration. Fig. 4 is a flowchart diagram showing steps of operating processing. Program which executes the processing in Fig. 4 is stored in the storing unit 210 in the operating device 200 or in another appropriate storing medium, and is executed by CPU which is included in the operating device 200. Fig. 2 shows the initial calibration processing operating unit 205 as a functioning unit which performs processing in Fig. 4.

First, a machine point of the total station 300 is arranged. The arrangement of the machine point means an operation to arrange the total station 300 under a condition in which the location and the orientation in the absolute coordinate system are known.

For example, the total station 300 is arranged, and locations of multiple reference marks whose locations in the absolute coordinate system are known are measured from the location of the total station. Then, by a backward intersection method using coordinate value of multiple reference point measured, the location and the orientation of the total station 300 in the absolute coordinate system are calculated. In this way, the arrangement of machine point of the total station 300 is performed.

After the arrangement of the machine point of the total station 300, measurement of the location of the reflection prism 107 is started by the total station 300. In addition, photographing by the camera 108 is started. Interval of measurement (frequency of repeating) of location of the reflection prism 107 by the total station 300 can be same as or different to interval of photographing (frequency of repeating) by the camera 108. In this state, the initial calibration is started. It should be noted that when performing the initial calibration, the heavy equipment 100 should be placed on a horizontal and flat surface if possible.

First, the rotating body 103 is rotated while the running body 101 is stationary (Fig. 3: step S101). Rotation angle is between 90° and 360°. During this rotation, the total station 300 repeatedly measures the location of the reflection prism 107, and the camera 108 repeatedly photographs.

Once the rotation of the rotating body 103 is completed, a three-dimensional reconstruction processing is performed based on the photographed data by the camera 108 (Figure 4: step S201). This process involves mutual orientation in which three-dimensional relative relationships are determined between the location and the orientation of the camera 108 and the feature points in stereo images, at a time of photographing the stereo image. The camera 108 moves in accordance with the rotation of the rotating body 103. During this movement, multiple images are photographed with different viewpoints, resulting in multiple stereo images. The above-described mutual orientation is then performed on these multiple stereo images.

Next, absolute location relationship among the reflection prism 107, the location of the rotation center of the rotating body 103, and the camera 108 is obtained by the least squares method using the prism location information (Fig. 4: step S202). In this processing, a bundle adjustment calculation of Formula 1 explained later is performed under the constraint condition of Formula 2 explained later.

Here, first, the location of the rotation center of the rotating body 103 is calculated based on the movement trajectory of the reflection prism 107 in step S101. That is, in step S101, the reflection prism 107 moves on a circular orbit. The location of the rotation center of the rotating body 103 is calculated by determining the center of the circular orbit (center of curvature of the arc) at this time.

The location of the reflection prism 107 is determined by taking into account difference (time series) between the measurement time of the reflection prism 107 and the photographing time of the camera 108. This is also true for steps S204 and S206.

Here, it is assumed that the location of i-th reflection prism 107 measured by the total station 300 is slightly offset from the location of the corresponding camera 108 when the image is photographed. This offset is due to asynchronous timing of time information (clocks) used by the total station 300 and the camera 108.

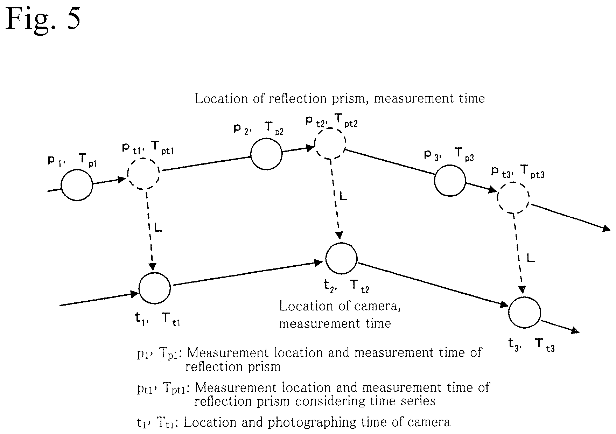

Fig. 5 shows the relationship between the location of the reflection prism 107 and the location of the camera 108 (location at the time of photographing). The solid-line circles ($p_i$, $T_{pi}$) (i = 1, 2, 3, etc.) represent the location of the reflection prism 107 measured by the total station 300 (surveying device) and the time of measurement.

The dashed-line circles ($p_{ti}$, $T_{pti}$), indicating the location of the reflection prism 107 and the time of measurement, represent the location and the time of the reflection prism 107 when taking into account the time series (taking into account time synchronization discrepancies). This is the location and the time of the reflection prism 107 that would be measured if the time were synchronized. In other words, the solid-line circles ($p_i$, $T_{pi}$) represent the location and the time of the reflection prism 107 that are actually measured, and the dashed-line circles ($p_{ti}$, $T_{pti}$) represent the location and the time of the reflection prism 107 that would be considered to be measured if synchronization were achieved.

This deviation is considered to be smaller than the difference between the i-th location of the reflection prism 107 and the (i+1)th location measured by the total station 300. Because the difference between the i-th and (i+1)th locations of the reflection prism 107 is minute, this deviation is considered to correspond to difference between the time the reflection prism 107 was positioned and photographing time by the camera 108.

Specifically, the reflection prism 107 at the time of photographing is considered to be located at a position shifted by the above-mentioned deviation amount from the i-th location of the reflection prism 107 measured by the total station 300 toward the (i+1)th location. This deviation amount is defined as a correction term proportional to the difference between the time the reflection prism 107 was positioned and the photographing time by the camera 108. In other words, the location of the prism 107 at the corresponding time of photographing is considered to be shifted by this correction term from the i-th prism location measured by the total station 300 toward the (i+1)th prism location.

In the bundle adjustment calculations, based on collinearity condition, which requires that the light fluxes (bundles) connecting three points, that is, a feature point obtained from a photographed image of the subject of photographing, a point on the photographed image, and the projection center, must be on the same straight line, an observation equation of the following Formula 1 is established for each light flux in each image, and the coordinates ($X_j$, $Y_j$, $Z_j$) of the feature points and the parameters of the location and the orientation of the camera 108 ($X_{oi}$, $Y_{oi}$, $Z_{oi}$, $a_{11i}$ to $a_{33i}$) are simultaneously adjusted by the least squares method.

In this adjustment calculation, the observation equation of Formula 1 below is formulated, and each parameter (the feature points ($X_j$, $Y_j$, $Z_j$) and the camera 108 location ($X_{oi}$, $Y_{oi}$, $Z_{oi}$) and orientation ($a_{11i}$ to $a_{33i}$ (rotation matrix))) is optimized using the least squares method. Furthermore, Formula 2, described below, is used as a constraint condition.

Formula 1

$$\sum_{i=1}^{m}\sum_{j=1}^{n}\left\{-c\,\frac{a_{11i}(X_j - X_{0i}) + a_{12i}(Y_j - Y_{0i}) + a_{13i}(Z_j - Z_{0i})}{a_{31i}(X_j - X_{0i}) + a_{32i}(Y_j - Y_{0i}) + a_{33i}(Z_j - Z_{0i})} - x_{ij}\right\}^2$$

$$\sum_{i=1}^{m}\sum_{j=1}^{n}\left\{-c\,\frac{a_{21i}(X_j - X_{0i}) + a_{22i}(Y_j - Y_{0i}) + a_{21i}(Z_j - Z_{0i})}{a_{31i}(X_j - X_{0i}) + a_{32i}(Y_j - Y_{0i}) + a_{33i}(Z_j - Z_{0i})} - y_{ij}\right\}^2$$

c: Screen distance (focal distance)

$(X_j, Y_j, Z_j)$: 3D coordinates of the feature point of interest

$(x_{ij}, y_{ij})$: Coordinates of point j on image (on screen) in image i

$(X_{oi}, Y_{oi}, Z_{oi})$: Location of the camera 108 when photograph i was photographed

$(a_{11i}$ to $a_{33i})$: Rotation matrix indicating orientation of the camera 108 when photograph i was photographed.

In Formula 1, the initial values of $(X_j, Y_j, Z_j)$ use three-dimensional coordinates of the feature points in the local coordinate system obtained by SfM. $(X_{oi}, Y_{oi}, Z_{oi})$ and $(a_{11i}$ to $a_{33i})$ are unknown quantities and are calculated by the adjustment calculations using Formula 1. It should be noted that results of the initial value adjustment process described below are used as the initial values for $(X_{oi}, Y_{oi}, Z_{oi})$ and $(a_{11i}$ to $a_{33i})$. Furthermore, because rough relationship between the local coordinate system and the absolute coordinate system is found by the initial value adjustment process, the initial values of $(X_j, Y_j, Z_j)$ also contain errors, but are close to the true values in the absolute coordinate system to a certain extent. These factors improve the convergence and accuracy of the adjustment calculations.

Formula 2

$$\sum_{i=1}^{m}\left\{-p'_{ti} - L' - t'_{i}\right\}$$

-$p'_{ti}$: Location of reflection prism 107 in local coordinate system that takes into account the time series

L': Offset amount between location of camera 108 and location of reflection prism 107

t': Location of camera 108 in local coordinate system

Here, -$p'_{ti}$ is a function of the location $(X_{pi}, Y_{pi}, Z_{pi})$ of the reflection prism 107 in the absolute coordinate system measured by the total station 300, the photographing time of the camera 108, and the positioning time of the reflection prism 107, and includes a correction term proportional to the difference between these two times. This correction term is used to determine the location of the reflection prism 107 synchronized with SfM based on the actually measured location $(X_{pi}, Y_{pi}, Z_{pi})$ of the reflection prism 107. (-$p'_{ti}$ -L') is the camera location on the local coordinate system that takes into account the time series of synchronization deviation calculated from the measurement values of the location of the reflection prism 107 by the total station 300.

Here, the local coordinate system is a coordinate system which describes location relationship between the location and the orientation of the camera 108 and the feature points extracted from the photographed images of the camera 108. The above constraint condition equation is established in the local coordinate system, and is an equation that calculates the sum of the difference between the camera location (-$p'_{ti}$-L') that takes into account the time series of synchronization deviation calculated from the measurement values of the location of the reflection prism 107 by the total station 300 and the camera position $t'_{i}$ which is unknown quantity to be determined finally, at each of locations of the camera.

Formula 2 is an equation which quantitatively compares the location of camera 108 (-$p'_{ti}$ -L') calculated from the measurement value of the location of reflection prism 107 by total station 300 with the predicted position $t'_{i}$ of the camera 108 determined by SfM.

In the adjustment calculation in step S202, conditions are searched for that minimize the difference shown in Formula 2. This determines an approximate similarity relationship for the unknown quantity L', and identifies the approximate location relationship between the reflection prism 107 and the camera 108.

In the adjustment calculations using Formulae 1 and 2, the residuals of Formulae 1 and 2 are calculated using the feature points $(X_j, Y_j, Z_j)$, exterior orientation parameters $(X_{oi}, Y_{oi}, Z_{oi}, a_{11i}$ to $a_{33i}$ (rotation matrix indicating orientation)), and $(L_X, L_Y, L_Z)$ as parameters. In this case, the least squares method is used to search for a combination of $(X_j, Y_j, Z_j)$, $(X_{oi}, Y_{oi}, Z_{oi}, a_{11i}$ to $a_{33i})$, and $(L_X, L_Y, L_Z)$ that will cause the residuals to converge. Here, $(L_X, L_Y, L_Z)$ are the offset amounts in the X, Y, and Z directions between the location of the camera 108 and the location of the reflection prism 107.

Specifically, to minimize the residuals shown in Formulae 1 and 2, correction amounts are added to each parameter $(X_j, Y_j, Z_j)$, $(X_{oi}, Y_{oi}, Z_{oi}, a_{11i}$-$a_{33i})$, and $(L_X, L_Y, L_Z)$, and simultaneous calculations of Formulae 1 and 2 are repeated. Then, the combinations of unknown parameters $(X_j, Y_j, Z_j)$, $(X_{oi}, Y_{oi}, Z_{oi}, a_{11i}$-$a_{33i})$, and $(L_X, L_Y, L_Z)$ for which Formulae 1 and 2 satisfy the convergence conditions are found. As the convergence conditions, conditions are used in which the residuals are sufficiently small and the variation in the residuals from the previous calculation is sufficiently small (a state in which the variation in the calculation results has converged).

It should be noted that if the separation distance L between the camera 108 and the reflection prism 107 is known, then $L^2 = L_X^2 + L_Y^2 + L_Z^2$, which is also a constraint condition on the above adjustment calculation.

Hereinafter the initial value adjustment will be explained. The initial value adjustment involves specifying initial values for the correspondence relationship between the location and time of the camera 108 described in the local coordinate system, and the location and time of the reflection prism 107 described in the absolute coordinate system. This initial value is used to perform the adjustment calculation described above. This initial value adjustment can also be thought of as a processing for determining the approximate relationship between the local coordinate system used in the mutual orientation described above and absolute coordinate system.

Hereinafter an example of the initial value adjustment processing will be explained. This technique is disclosed in Japanese Unexamined Patent Application Publication No. 2023-058216. The initial value adjustment is performed by the following three-stage processing. In the first stage of the processing, attention is paid to start of the movement of the camera 108 location and start of the movement of the reflection prism 107 location, and the correspondence relationship between these two locations is specified. In this processing, attention is paid to the start point of the movement, and the corresponding point (location) of the two is identified. Conversely, it is also possible to identify the corresponding point by paying attention to end point of the movement (point where the movement stops).

In this processing, the correspondence relationship at the timing at which the movement starts and/or ends is determined between the measured location (location in the absolute coordinate system) of the reflection prism 107 by the total station 300 and the calculated location (location in the local coordinate system) of the camera 108 by SfM based on the photographed image of the camera 108.

The second stage of processing is performed after the first stage of processing. In the second stage of processing, processing is performed focusing on location changes. In this case, angle formed by three consecutive points are calculated for all points (all camera locations and reflection prism locations). The angles formed on the camera side and the angles formed on the reflection prism side are compared, and a search is made for the combination that minimizes the sum of the absolute values of the differences.

For example, it is supposed that the angles formed by the camera 108 position are $\theta_{c1}, \theta_{c2}, \theta_{c3}, \theta_{c4} \ldots \theta_{cn}$, and the angles formed by the reflection prism 107 position are $\theta_{p1}, \theta_{p2}, \theta_{p3}, \theta_{p4} \ldots \theta_{pn}$. In this case, while changing the combination, the differences between each of the angles $\theta_{c1}, \theta_{c2}, \theta_{c3}, \theta_{c4} \ldots \theta_{cn}$ and $\theta_{p1}, \theta_{p2}, \theta_{p3}, \theta_{p4} \ldots \theta_{pn}$ are calculated, and the sum of the absolute values is calculated. The combination location that minimizes this sum is adopted as the corresponding combination.

For example, the sum of the absolute values of $\theta_{p1}$-$\theta_{c1}$, $\theta_{p2}$-$\theta_{c2}$, $\theta_{p3}$-$\theta_{c3}$, etc., the sum of the absolute values of $\theta_{p2}$-$\theta_{c1}$, $\theta_{p3}$-$\theta_{c2}$, $\theta_{p4}$-$\theta_{c3}$, etc., the sum of the absolute values of $\theta_{p3}$-$\theta_{c1}$, $\theta_{p4}$-$\theta_{c2}$, $\theta_{p5}$-$\theta_{c3}$, etc., are all calculated, and the combination with the smallest sum is found.

According to this method, changes in the location of the reflection prism 107 in the absolute coordinate system and changes in the location of the camera 108 in the local coordinate system are compared, and the correspondence relationship between the two is determined. By determining this correspondence relationship, the initial value adjustment is performed with even greater accuracy than in the first stage.

In the second stage of processing, it is desirable that the calculation interval for the camera 108 location and the measurement interval for the reflection prism 107 location are as close as possible (ideally they are the same). After the second stage of processing, the third stage of processing is performed. In the third stage of processing, the correspondence relationship between the camera location and the reflection prism location is determined using the least squares method. In this processing, a transformation matrix from the local coordinate system to the absolute coordinate system is determined. This transformation matrix is used to convert the local coordinate system (the feature points, the location and orientation of the camera 108) to the absolute coordinate system. The transformation matrix determined here and the results of the transformation using this transformation matrix are used as the initial values for the adjustment calculation described above.

It should be noted that the above-mentioned initial value adjustment stage in step S202 occurs before the adjustment calculations, and the location relationship between the reflection prism 107 and the camera 108 is unknown.

Therefore, in step S202, the coordinate transformation in the third stage described above is performed on a horizontal plane including the location of the reflection prism 107, with the rotation center of the rotating body 103 as a reference point.

These three stages of initial value adjustment processing obtain initial values for the relationship between the local coordinate system which describes the relationship between the camera location and the feature points in each photographed image obtained by the mutual orientation, and the absolute coordinate system. The processing in the first and third stages described above are also performed in steps S204 and S206.

By executing step S202, absolute orientation is performed, and the location and the orientation of the camera 108 in the absolute coordinate system are determined. However, errors are included at this stage. Therefore, in order to reduce these errors, processing of step S102 and processing of steps S203 and S204 are performed.

It should be noted that if the convergence of the results of the adjustment calculation in step S202 exceeds a predetermined convergence range, a notification is issued urging a user to perform the processing of step S101 again. When step S101 is executed again, the rotating body 103 is rotated by moving to a flatter location, or the rotating body 103 is rotated by changing the rotation angle and rotation speed. For example, changing the rotation conditions of the rotating body 103 may change the conditions for obtaining the initial values described above, which may improve the accuracy of the adjustment calculation.

In step S102, the running body 102 is moved straight while the rotating body 103 is stationary. The straight movement may be forward or backward. Furthermore, it may also be forward movement followed by backward movement in a straight line, or backward movement followed by forward movement in a straight line. The distance moved is 0.5 m or more. Repeated measurement of the location of the reflection prism 107 by the total station 300 and repeated photographing by the camera 108 continue in step S102.

After step S102, a three-dimensional reconstruction processing is performed based on the image data obtained by the camera 108 in step S102 (Fig. 4: step S203). This processing performs mutual orientation which determines relative relationship between the location and the orientation of the camera 108 during photographing the stereo images, and the feature points in the stereo images, so that three-dimensional model is obtained indicating these relationships.

In step S203, the three-dimensional model obtained during the straight-moving action in step S102 is added (combined) to the three-dimensional model obtained by the adjustment calculation in step S202. The three-dimensional model obtained in step S101 and the three-dimensional model obtained in step S 102 overlap. This is because the photographing ranges by the camera 108 overlap.

Next, adjustment calculations are performed again on the three-dimensional model obtained in step S203 using Formulae 1 and 2(step S204). In step S102, the reflection prism 107 and the camera 108 move parallel to each other along a straight line. This provides an accurate scale (absolute value of distance information), improving the accuracy of the location information in the adjustment calculation in step S204. Furthermore, the three-dimensional model adjusted in step S202 (the three-dimensional model obtained when the rotating body 103 was rotating) is integrated with the three-dimensional model obtained in step S203 and simultaneously recalculated for adjustment, thereby reducing any remaining errors that could not be fully adjusted in step S202.

In step S204, L' in Formula 2 is precisely calculated. In step S204, instead of performing the adjustment calculation, a method can be employed in which movement amounts of the reflection prism 107 and the camera 108 in the straight-moving portion are compared, and the movement amount of the camera 108 is adjusted to match the movement amount of the reflection prism 107. If the convergence of the results of the adjustment calculation in step S203 exceeds a predetermined convergence range, a notification is issued to prompt the execution of the processing related to step S102 again. When step S102 is executed again, one or more of the following are performed: moving to a flatter location and moving the rotating body 103 straight, changing the movement distance, and changing acceleration and deceleration during straight movement.

In step S102, the reflection prism 107 and the camera 108 move linearly in parallel. Therefore, by performing the adjustment calculations in step S204 using Formulae 1 and 2, the offset amount between the position of the camera 108 and the position of the reflection prism 107 can be calculated with high precision.

Next, the blade tip 106a or the bucket 106 pushes against the ground to lift the heavy equipment 100 (lifting the front of the rotating body 103 off the ground), and tilt the rotating body 103 (step S103). The tilt angle is set to between 5° and an angle that will not cause the heavy equipment 100 to tip over, from the horizontal plane. Then, the three-dimensional data based on the image data obtained by the camera 108 during this processing is added to the three-dimensional model obtained by the adjustment calculation in step S204, and integrated three-dimensional model is reconstructed (step S205).

The three-dimensional model obtained by the adjustment calculation in step S204 overlaps with the three-dimensional model obtained in step S103. This is because objects photographed by the camera 108 in steps S101, S102, and S103 overlap. Therefore, the three-dimensional model obtained at this stage (step S205) by integrating the three-dimensional models obtained in steps S101 to S103 is an integration of the three-dimensional models obtained during each different movement of the rotating body 103.

Once the integrated three-dimensional model described above is obtained in step S205, adjustment calculations therefor are performed using Formulae 1 and 2 (step S206). In step S205, the three-dimensional data for when tilting in the vertical direction occurs is obtained, and this is used to perform the adjustment calculations (optimization calculations for each parameter) in step S206.

The processing up to step 204 was the optimization of unknown parameters using three-dimensional data acquired during movement on a horizontal plane. Here, by performing adjustment calculations in which the three-dimensional data when the rotating body 103 is tilted is added, the adjustment calculations are performed that take into account changes in the three-dimensional data in the vertical direction, thereby further improving accuracy of the optimized unknown parameters.

Furthermore, in the processing of step S103, front portion of the rotating body 103 is lifted, and the rotating body 103 tilts backward. As a result, information is obtained, in which location relationship among the reflection prism 107, the location of the rotation center of the rotating body 103 and the camera 108 is correlated to the orientation of the rotating body.

If the convergence of the results of the adjustment calculation in step S206 exceeds a predetermined convergence range, a notification is issued urging the processing of step S103 to be performed again. When step S103 is executed again, the angle and speed at which the machine body is lifted (tilted) are changed and the lifting operation is performed again.

The processing of steps S201 to S206 determine the relationship among the location of the reflection prism 107, the location of the camera 108, and the location of the rotation center of the rotating body 103, as well as the relationship between this relationship and the orientation of the rotating body 103. The information obtained here becomes the initial calibration value obtained by the initial calibration.

By obtaining the initial calibration value, if the locations of the reflection prism 107 and the rotating body 103 in the absolute coordinate system are given, it is possible to obtain information about the location and the orientation of the camera 108 in the absolute coordinate system.

(Actual action)

The initial calibration is performed in advance. It is also possible to perform the initial calibration at the work site. Then, before starting work, the total station 300 is set up as a machine point. The machine point is selected to be a location where the location of the reflection prism 107 can be measured.

After the machine point is set up, the total station 300 starts measuring the location of the reflection prism 107, and the camera 108 starts photographing. The interval (repetition frequency) between measurements of the location of the reflection prism 107 by the total station 300 and the interval (repetition frequency) between photographing by the camera 108 may be the same or different. In this state, the on-site calibration processing is performed, and then work by the heavy equipment 100 begins. When work by the heavy equipment 100 begins, processing related to the location and orientation of the blade tip 106a begins.

The on-site calibration processing determines the location of the rotation center of the rotating body 103 in the absolute coordinate system. Here, when the location of the reflection prism 107 in the absolute coordinate system is measured by the total station 300, the location and the orientation of the blade tip 106a in the absolute coordinate system are calculated from the measured location of the reflection prism, the location of the rotation center of the rotating body 103, and the measured values of the tilt sensors 113 to 116.

As the vehicle 100 moves, the location of the rotation center of the rotating body 103 moves. This movement is tracked by SfM based on photographed images by the camera 108. The relationship among the location of the reflection prism 107, the location of the rotation center of the rotating body 103, and the location and the orientation of the camera 108 is a known information by the initial calibration. Therefore, the location and the orientation of the camera 108 in the absolute coordinate system at that time are determined by the on-site calibration.

When the running body 101 moves from the on-site calibration state, the reflection prism 107 and the camera 108 also move. Here, the movement of the reflection prism 107 is tracked by the total station 300, and its location in the absolute coordinate system is measured. The movement of the camera 108 is tracked by the SfM, and its location in the absolute coordinate system is measured. Here, the relationship among the location of the reflection prism 107, the location of the rotation center of the rotating body 103, and the location of the camera 108 is a known information by the initial calibration.

Therefore, it is possible to determine the location of the rotation center of the rotating body 103 in the absolute coordinate system after the vehicle 100 has moved. By obtaining the location of the rotation center of the rotating body 103 in the absolute coordinate system, it becomes possible to calculate the location and the orientation of the blade tip 106a by measuring the location of the reflecting prism 107 using the total station 300. In other words, even if the vehicle 100 moves after the on-site calibration, it is possible to obtain information about the location and the orientation of the blade tip 106a. This is the same even if the movement is intermittent, and the on-site calibration only needs to be performed once before work.

(Superiority)

Even if the running body 101 moves and the location of the rotation center of the rotating body 103 moves, a new location of the rotation center can be determined by SfM using the photographed images by the camera 108. Therefore, there is no need to rotate the rotating body 103 and then determine the rotation center after the movement again. This makes it possible to improve the work efficiency of the heavy equipment 100.

Data of the precise location relationship between the reflection prism 107 and the camera 108 is obtained in the initial calibration processing. Therefore, when installing the reflection prism 107 and the camera 108, precision in the installation locations is not required, and no complicated work is required.

In the initial calibration, three-dimensional data is acquired during actions such as the rotation of the rotating body 103, the straight movement of the running body 101, and intentional tilting of the rotating body 103, and initial values necessary for SfM are obtained based on the photographed images by the camera 108. This processing makes it possible to easily and accurately acquire information on the location relationship between the camera 108 and the reflection prism 107 arranged on the rotating body 103.

Furthermore, by performing the initial calibration in three stages, the accuracy of obtaining the unknown parameters obtained through the adjustment calculations can be improved.

That is, in the first stage (step S101), the adjustment calculations are performed using the three-dimensional data obtained during the rotation of the rotating body 103. This results in the adjustment calculations related to the location relationship between the reflecting prism 107 and the camera 108, including the location of the rotation center of the rotating body 103.

In the second stage (step S102), the adjustment calculations are performed using the three-dimensional data obtained while the running body 101 is moving straight ahead, without rotating the rotating body 103. During this process, the reflection prism 107 and camera 108 move in a straight lines in mutually parallel, providing an accurate scale for the three-dimensional relationship between the reflecting prism 107 and camera 108 during the adjustment calculations.

In the third stage (step S103), the rotating body 103 is tilted, and the adjustment calculations are performed using the three-dimensional data in the vertical direction (Z-axis direction). This improves the accuracy of each parameter in the vertical plane, in addition to the accuracy of each parameter in the horizontal plane.

2. Second Embodiment

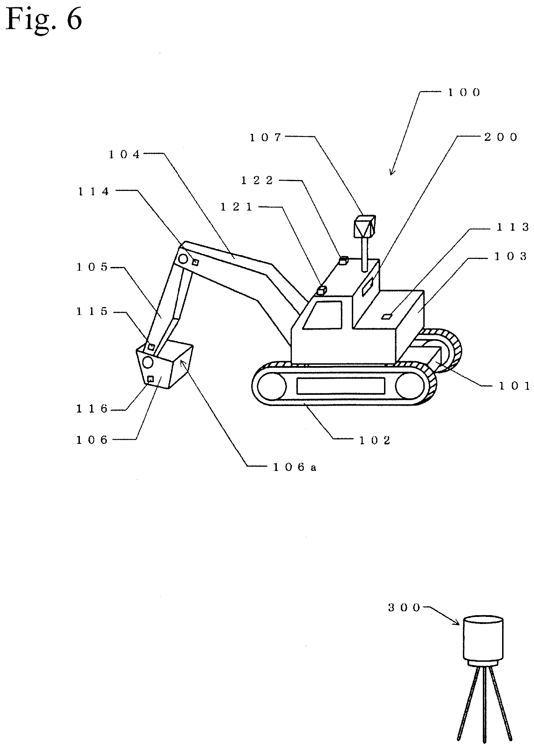

Fig. 6 shows an overview of this embodiment. This embodiment relates to a technique for more easily obtaining preliminary data required for calculating the blade tip 106a by using stereo photo measurement. In this embodiment, cameras 121 and 122 are prepared as stereo cameras. The cameras 121 and 122 are attached to the rotating body 103 having a distance from each other so that the blade tip 106a is within the photographing range. The cameras 121 and 122 take stereo photographs of the blade tip 106a.

Here, initial values of locations and orientations of the cameras 121 and 122 in the absolute coordinate system are determined using the technique of the first embodiment. This enables stereophotography of the blade tip 106a using the cameras 121 and 122, and the location and the orientation of the blade tip 106a relative to the location of the rotation center of the rotating body 103 are determined. Then, the measured location of the reflection prism by the total station 300 and the measured values of the tilt sensors 113 to 116 are obtained. By performing the above operation multiple times with the location of the blade tip 106a changed, preliminary data required to calculate the location and the orientation of the blade tip 106a can be obtained.

Cameras 121 and 122 have a photographing range including the blade tip 106a, allowing them to record images and obtain three-dimensional information about the work being done by the heavy equipment 100. It is also possible to use three or more cameras.

This embodiment simplifies the processing of acquiring the preliminary data necessary to calculate the location and the orientation of the blade tip 106a. For example, the system can be put into operation by the following steps:

(1) Attaching the reflection prism 107, the cameras 121 and 122 to the rotating body 103
(2) Attaching the tilt sensors 113-116
(3) Initial calibration processing
(4) Acquiring preliminary data for calculating the location and the orientation of the blade tip 106a using stereophotography with cameras 121 and 122
(5) On-site calibration processing

In this embodiment, as in the first embodiment, after performing the on-site calibration processing at the start of work, there is no need to interrupt work even if the running body 101 moves, and the location and the orientation of the blade tip 106a are obtained.

In the stereo photo measurement, it is necessary to precisely determine the locations and the orientations of the two cameras that make up the stereo camera, which requires complicated preparatory work. In this embodiment, the camera locations and orientations are determined by calculation in the initial calibration processing, so the installation locations of the cameras 121 and 122 can be approximate. This eliminates the need for complicated work, making the system highly practical. This is the same when three or more cameras are used.

In this embodiment, three-dimensional photographic measurement of the blade tip may be performed using multiple cameras to directly determine the location and the orientation of the blade tip 106a. In this case, the location and the orientation of each camera used in the absolute coordinate system are determined from the results of the initial calibration and the measurement results of the location of the reflection prism 107 by the total station 300. Then, the location and the orientation of the blade tip 106a in the absolute coordinate system can be determined by three-dimensional photographic measurement. In this case, information on the location and orientation of the blade tip 106a can be obtained without using the tilt sensors 114-116 (although the tilt sensors 114-116 may, of course, be used). This also provides simplicity by not requiring precision in the location and orientation of the multiple cameras used when installing them.

3. Third Embodiment

The present invention can also be used in a technique for calculating a blade tip position by installing a Global Navigation Satellite System (GNSS) antenna on a rotating body of a heavy equipment and measuring location of the antenna in the absolute coordinate system. When measuring the location using the GNSS, it is preferable to use relative positioning, which has high measurement location accuracy.

In this case, a GNSS receiving antenna is installed on the rotating body 103 instead of the reflection prism 107. The system operates by measuring the antenna location using GNSS. In this case, the GNSS antenna is attached to the rotating body 103. The location of the GNSS antenna in the absolute coordinate system is measured using GNSS, and the location and the orientation of the blade tip 106a are calculated using the measured value. This embodiment is the same as the first embodiment except that GNSS is used as location information. This embodiment can also be applied to the second embodiment.

4. Fourth Embodiment

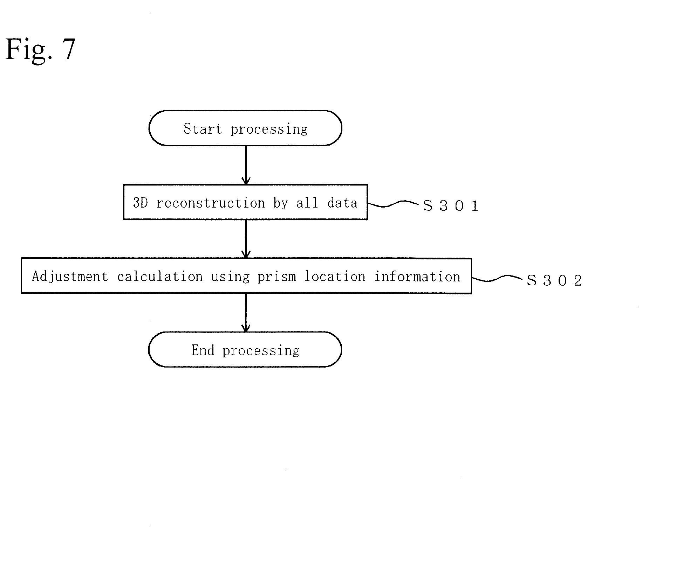

Fig. 7 is a flowchart for processing the 3D data obtained in steps S101-103 of Fig. 3 collectively. In this case, 3D reconstruction (mutual orientation) is performed using the data obtained in steps S101-103 of Fig. 3 (step S301), and then an adjustment calculation is performed using the location information of the reflection prism 107 (step S302). Here, the adjustment calculation is performed using Formulae 1 and 2.

5. Other

The present invention can be applied to heavy equipments other than hydraulic shovels, as long as it is equipped with a running body and a rotating body. The present invention can also be applied to heavy equipment that performs unmanned work.

When step S101 is executed, the process of S201 and the subsequent process of step S202 may be executed in parallel. Furthermore, when step S102 is executed, the process of S203 and the subsequent process of step S204 may be executed in parallel. Furthermore, when step S103 is executed, the process of S205 and the subsequent process of step S206 may be executed in parallel. After the processing of Fig. 3 is completed, the processing of Fig. 4 may be executed.

Explanation of Reference Numerals

100: Heavy equipment, 101: running body, 102: caterpillar, 103: rotating body, 104: boom, 105: arm, 106: bucket, 106a: blade tip, 107: reflection prism, 108: camera, 113: tilt sensor, 114: tilt sensor, 115: tilt sensor, 116: tilt sensor, 121: camera, 122: camera, 200: operating device, 300: total station

**Claims**

**1.** A method for obtaining information of heavy equipment including a running body having moving means and a rotating body which is rotatable on the running body and which has an optical target and a camera,
the method comprising:

a first step in which location of the optical target is measured by a surveying device and SfM is performed using photographed images by the camera during a process of rotating action of the rotating body; and

a second step in which the location of the optical target is measured by the surveying device and SfM is performed using the photographed images by the camera during a process of straight-moving action of the running body without rotating the rotating body;

wherein relationship of the location of the optical target and location of the camera on the rotating body is calculated based on the location of the optical target obtained by the surveying device and the location and orientation of the camera obtained by SfM in the first step and the second step.

2. A method for obtaining information of heavy equipment including a running body having moving means and a rotating body which is rotatable on the running body and which has an optical target and a camera,
the method comprising:

a first step in which location of the optical target is measured by a surveying device and SfM is performed using photographed images by the camera during a process of rotating action of the rotating body;

a second step in which the location of the optical target is measured by the surveying device and SfM is performed using the photographed images by the camera during a process of straight-moving action of the running body without rotating the rotating body; and

a third step in which the location of the optical target is measured by the surveying device and SfM is performed using the photographed images by the camera during a process of tilting action of the rotating body from horizontal;

wherein relationship of the location of the optical target and location of the camera on the rotating body is calculated based on the location of the optical target obtained by the surveying device and the location and orientation of the camera obtained by SfM in the first step to the third step.

3. The method for obtaining information of heavy equipment according to claim 1 or 2, wherein bundle adjustment calculation is performed based on the images photographed by the camera in the first step and the second step, and the bundle adjustment calculation is performed under constraint condition in which difference between the location of the optical target obtained by the surveying device and the location of the optical target obtained by the SfM in the first step and the second step becomes minimal.

4. The method for obtaining information of heavy equipment according to claim 2, wherein the heavy equipment is a hydraulic shovel, and
in the third step, an action is performed in which a bucket of the hydraulic shovel presses the ground so that the rotating body is tilted from horizontal direction.

5. An apparatus for handling information of heavy equipment including a running body having moving means and a rotating body which is rotatable on the running body and which has an optical target and a camera,
the apparatus comprising an operating unit executing following steps:

a first step in which location of the optical target is measured by a surveying device and SfM is performed using photographed images by the camera during a process of rotating action of the rotating body; and

a second step in which the location of the optical target is measured by the surveying device and SfM is performed using the photographed images by the camera during a process of straight-moving action of the running body without rotating the rotating body;

wherein relationship of the location of the optical target and location of the camera on the rotating body is calculated based on the location of the optical target obtained by the surveying device and the location and orientation of the camera obtained by SfM in the first step and the second step.

6. A program made to, when read and executed by a computer processor, cause the computer processor to execute processing of information of heavy equipment including a running body having moving means and a rotating body which is rotatable on the running body and which has an optical target and a camera,
the processing comprising following steps:

a first step in which location of the optical target is measured by a surveying device and SfM is performed using photographed images by the camera during a process of rotating action of the rotating body; and

a second step in which the location of the optical target is measured by the surveying device and SfM is performed using the photographed images by the camera during a process of straight-moving action of the running body without rotating the rotating body;

wherein relationship of the location of the optical target and location of the camera on the rotating body is calculated based on the location of the optical target obtained by the surveying device and the location and orientation of the camera obtained by SfM in the first step and the second step.

Fig. 1

# Fig. 2

| Operating device | 200 |
| --- | --- |
| Data receiving unit | 201 |
| SfM operating unit | 202 |
| Reflection prism moving trajectory obtaining unit | 203 |
| Rotating body rotation center position calculating unit | 204 |
| Initial calibration processing operating unit | 205 |
| Blade tip location and orientation calculating unit | 207 |
| Storing unit | 210 |
| Total station action controlling unit | 211 |
| Communicating device | 212 |

Fig. 3

```
        ┌─────────────────────────┐
        │     Start processing    │
        └─────────────────────────┘
                     │
                     ▼
   ┌──────────────────────────────┐
   │  Rotation of rotating body   │~~~~~S 1 0 1
   └──────────────────────────────┘
                     │
                     ▼
   ┌──────────────────────────────┐
   │ Straight move of running body│~~~~~S 1 0 2
   └──────────────────────────────┘
                     │
                     ▼
   ┌──────────────────────────────┐
   │    Lift up of machine body   │~~~~~S 1 0 3
   └──────────────────────────────┘
                     │
                     ▼
        ┌─────────────────────────┐
        │     End processing      │
        └─────────────────────────┘
```

# Fig. 4

```
        ┌─────────────────────────┐
        │     Start processing    │
        └─────────────────────────┘
                     │
                     ▼
   ┌──────────────────────────────────┐
   │  3D reconstruction by rotation data │────  S201
   └──────────────────────────────────┘
                     │
                     ▼
 ┌──────────────────────────────────────────┐
 │ Adjustment calculation using prism location information │────  S202
 └──────────────────────────────────────────┘
                     │
                     ▼
  ┌──────────────────────────────────────────┐
  │ 3D reconstruction by adding straight-move data │────  S203
  └──────────────────────────────────────────┘
                     │
                     ▼
 ┌──────────────────────────────────────────┐
 │ Adjustment calculation using prism location information │────  S204
 └──────────────────────────────────────────┘
                     │
                     ▼
 ┌──────────────────────────────────────────┐
 │ 3D reconstruction by adding machine body lift up data │────  S205
 └──────────────────────────────────────────┘
                     │
                     ▼
 ┌──────────────────────────────────────────┐
 │ Adjustment calculation using prism location information │────  S206
 └──────────────────────────────────────────┘
                     │
                     ▼
        ┌─────────────────────────┐
        │      End processing     │
        └─────────────────────────┘
```

Fig. 5

Location of reflection prism, measurement time

$p_1$, $T_{p1}$: Measurement location and measurement time of
reflection prism

$p_{t1}$, $T_{pt1}$: Measurement location and measurement time of
reflection prism considering time series

$t_1$, $T_{t1}$: Location and photographing time of camera

Fig. 6

Fig. 7

```
          ╭──────────────────────────╮
          │     Start processing     │
          ╰──────────────────────────╯
                       │
                       ▼
        ┌──────────────────────────────┐
        │ 3D reconstruction by all data │────∿ S 3 0 1
        └──────────────────────────────┘
                       │
                       ▼
 ┌─────────────────────────────────────────────────────┐
 │ Adjustment calculation using prism location information │────∿ S 3 0 2
 └─────────────────────────────────────────────────────┘
                       │
                       ▼
          ╭──────────────────────────╮
          │      End processing      │
          ╰──────────────────────────╯
```

# EUROPEAN SEARCH REPORT

**Application Number**

EP 25 20 0679

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2024 046228 A (TOPCON CORP) 3 April 2024 (2024-04-03) * paragraphs [0015], [0021] - [0027]; figures 1-6 * ----- | 1-6 | INV. E02F9/26 |
| A | CN 117 377 805 A (NOVATRON OY) 9 January 2024 (2024-01-09) * paragraphs [0073] - [0075], [0188]; figure 1 * ----- | 1-6 | |

**TECHNICAL FIELDS SEARCHED (IPC)**

E02F

The present search report has been drawn up for all claims

| Place of search | Date of completion of the search | Examiner |
|---|---|---|
| Munich | 28 January 2026 | Bultot, Coralie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 0679

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2026

| Patent document cited in search report | | | Publication date | Patent family member(s) | | Publication date |
|---|---|---|---|---|---|---|
| JP 2024046228 | A | | 03-04-2024 | EP 4592639 | A1 | 30-07-2025 |
| | | | | JP 2024046228 | A | 03-04-2024 |
| | | | | WO 2024062781 | A1 | 28-03-2024 |
| CN 117377805 | A | | 09-01-2024 | CN 117377805 | A | 09-01-2024 |
| | | | | DK 4347953 | T3 | 18-08-2025 |
| | | | | EP 4347953 | A1 | 10-04-2024 |
| | | | | ES 3037841 | T3 | 07-10-2025 |
| | | | | FI 4347953 | T3 | 11-08-2025 |
| | | | | JP 7646032 | B2 | 14-03-2025 |
| | | | | JP 2024520230 | A | 23-05-2024 |
| | | | | US 2024218635 | A1 | 04-07-2024 |
| | | | | WO 2022248766 | A1 | 01-12-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017181340 A
- US 6711838 B
- JP 7514459 B
- JP 2008002842 A
- JP 2023058216 A